(19) Europäisches Patentamt
European Patent Office
Office européen des brevets

(11) **EP 4 491 768 A1**

(12) **EUROPEAN PATENT APPLICATION**
published in accordance with Art. 153(4) EPC

(43) Date of publication:
**15.01.2025 Bulletin 2025/03**

(51) International Patent Classification (IPC):
*C25B 13/02* (2006.01)    *C25B 13/08* (2006.01)
*C25B 1/23* (2021.01)    *C25B 9/19* (2021.01)

(21) Application number: 23792161.4

(22) Date of filing: **19.04.2023**

(52) Cooperative Patent Classification (CPC):
**C25B 1/23; C25B 9/19; C25B 13/02; C25B 13/08**

(86) International application number:
**PCT/KR2023/005281**

(87) International publication number:
**WO 2023/204587 (26.10.2023 Gazette 2023/43)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:   **21.04.2022   KR 20220049687
18.04.2023   KR 20230050853**

(71) Applicant: **LG Chem, Ltd.**
**Yeongdeungpo-gu**
**Seoul 07336 (KR)**

(72) Inventors:
• **NOH, Tai Min**
**Daejeon 34122 (KR)**
• **NOH, Tae Geun**
**Daejeon 34122 (KR)**
• **LEE, Jong Jin**
**Daejeon 34122 (KR)**
• **KIM, Tae Keun**
**Daejeon 34122 (KR)**
• **LIM, Hyung Seob**
**Daejeon 34122 (KR)**

(74) Representative: **Hoffmann Eitle**
**Patent- und Rechtsanwälte PartmbB**
**Arabellastraße 30**
**81925 München (DE)**

(54) **SEPARATOR AND ELECTROCHEMICAL CONVERSION CELL COMPRISING SAME**

(57)    The present invention relates to a separator including a base membrane, and a hydrophilic porous structure layer or a hydrophobic porous structure layer, which is stacked on at least one side of the base membrane, wherein the base membrane is an anion exchange membrane, a cation exchange membrane, or an amphoteric ion exchange membrane.

[FIG. 1]

**Description**

## TECHNICAL FIELD

### Cross-reference to Related Applications

The present application claims the benefit of the priority of Korean Patent Application No. 10-2022-0049687, filed on April 21, 2022, and Korean Patent Application No. 10-2023-0050853, filed on April 18, 2023, which are hereby incorporated by reference in their entirety.

### Technical Field

The present invention relates to a separator and an electrochemical conversion cell including the same.

## BACKGROUND ART

Carbon dioxide is a greenhouse gas that contributes to global warming, and thus needs to be reduced. Carbon dioxide may be reduced by means of trapping, chemical conversion, or electrochemical conversion. In particular, the electrochemical conversion may precisely control components so that other synthesis gases may be produced, and thus may give better economic benefits than merely removing carbon dioxide.

The process of electrochemically decomposing carbon dioxide is similar to water electrolysis technology, but in general, a KOH aqueous solution with a certain concentration is used as an electrolyte since activity in an electrochemical reaction is greater in a strong base atmosphere. When current is applied while water is supplied to an anode, the water is decomposed into hydrogen ions and electrons along with oxygen gas generation. The electrons move to a cathode through an external conductor, and the hydrogen ions move to the cathode through an ion-selective separator. At this point, the transferred electrons react with carbon dioxide and water supplied to the cathode to be decomposed into carbon monoxide and hydroxide ions (OH-), and the generated hydroxide ions react with hydrogen ions ($H^+$) of the anode to produce water, thereby becoming electrically neutral. The above process completes the electrochemical decomposition reaction of carbon dioxide. In this case, apart from the reaction of generating carbon monoxide, the water supplied along with carbon dioxide is electrolyzed by reacting with the transferred electrons to generate both hydrogen gas and hydroxide ions. The reaction between water and electrons is in a relation of competitive reaction to the reaction of generating carbon monoxide. The above reactions are electrochemical reactions, and thus an amount of carbon monoxide generated and a ratio of hydrogen/carbon dioxide may be easily controlled through voltage regulation.

Meanwhile, when an anion exchange membrane is used as the ion-selective separator, the electrolysis reaction of carbon dioxide may show excellent conversion rate of carbon dioxide. However, in general, there is a risk that the anion exchange membrane is easily dried and deformed at room temperature, and to prevent the risk, the anion exchange membrane may be stored in a setting with sufficient moisture. However, when the anion exchange membrane is exposed at room temperature in order to assemble an electrochemical conversion cell or stack at room temperature, the anion exchange membrane may dry out in a short period of time to be broken or damaged, and such low mechanical properties result in reduced processability of assembling work.

(Patent Document 1) KR 10-2019-0125822 A

## DISCLOSURE OF THE INVENTION

## TECHNICAL PROBLEM

An aspect of the present invention provides improved mechanical properties at room temperature by ensuring that a certain amount of moisture is constantly present in a separator.

That is, the present invention provides a separator formed to have a structure in which a porous structure layer having hydrophilic or hydrophobic properties is stacked on a surface of an ion exchange membrane, which in turn constantly retains a certain amount of moisture, thereby keeping the performance of the ion exchange membrane at the same level and improving mechanical properties at room temperature, and an electrochemical conversion cell including the same.

## TECHNICAL SOLUTION

The present invention provides a separator and an electrochemical conversion cell including the same.

(1) According to an aspect of the present invention, there is provided a separator including a base membrane, and a hydrophilic porous structure layer or a hydrophobic porous structure layer, which is stacked on at least one side of the base membrane, wherein the base membrane is an anion exchange membrane, a cation exchange membrane, or an amphoteric ion exchange membrane.

(2) The present invention provides the separator according to (1) above, wherein the hydrophilic porous structure layer includes a hydrophilic polymer.

(3) The present invention provides the separator according to (1) or (2) above, wherein the hydrophilic porous structure layer is a polytetrafluoroethylene (PTFE) structure layer having a hydrophilic-treated surface.

(4) The present invention provides the separator according to any one of (1) to (3) above, wherein the hydrophilic porous structure layer has an average pore diameter of 0.2 um to 0.45 $\mu$m.

(5) The present invention provides the separator according to any one of (1) to (4) above, wherein the hydrophilic porous structure layer is stacked on any one side of the base membrane.

(6) The present invention provides the separator according to any one of (1) to (5) above, wherein the separator includes no binder between the base membrane and the hydrophilic porous structure layer.

(7) The present invention provides the separator according to any one of (1) to (6) above, wherein the hydrophobic porous structure layer includes at least one selected from the group consisting of PTFE, PVDF, nylon, cellulose acetate (CA), and polyethylene sulfide (PES).

(8) According to another aspect of the present invention, there is provided an electrochemical conversion cell including a cathode, an anode, an electrolyte, and a separator according to any one of (1) to (7) above, which is disposed between the cathode and the anode.

(9) The present invention provides the electrochemical conversion cell according to (8) above, wherein the electrochemical conversion cell converts carbon dioxide into carbon monoxide.

## ADVANTAGEOUS EFFECTS

A separator of the present invention forms a structure in which a porous structure layer having hydrophilic or hydrophobic properties is stacked on a surface of an ion exchange membrane, and is capable of keeping a certain level of moisture in the ion exchange membrane even at room temperature for a long period of time, and may thus improve mechanical properties of the ion exchange membrane.

In addition, according to the separator of the present invention, moisture wettability is maintained even at room temperature to prevent the separator from drying out and being damaged or broken, and accordingly, low processability that may be caused by the breakage when cells or stacks are assembled at room temperature may be improved.

In addition, an electrochemical conversion cell including the separator of the present invention includes a separator capable of maintaining moisture wettability even at room temperature, and may thus improve mechanical properties and also have equal or higher levels in terms of carbon monoxide Faraday efficiency, carbon dioxide conversion rate, and voltage of the electrochemical conversion cell.

## BRIEF DESCRIPTION OF THE DRAWINGS

FIG. 1 is a side view showing a structure of a separator according to the present invention;
FIG. 2 is an image showing a state after exposing a typical anion exchange membrane in the atmosphere at room temperature for 2 hours;
FIG. 3 is an image showing a state after exposing a separator according to the present invention in the atmosphere at room temperature for 2 hours;
FIG. 4 shows carbon dioxide conversion rate, carbon monoxide Faraday efficiency and voltage of Examples 1 to 4 and Comparative Examples 1 and 2; and
FIG. 5 is an SEM image showing the shape of a porous structure layer according to the present invention.

## MODE FOR CARRYING OUT THE INVENTION

Hereinafter, the present invention will be described in detail to aid in understanding of the present invention. As used herein, it will be understood that words or terms used in the specification and claims of the present invention shall not be construed as being limited to having the meaning defined in commonly used dictionaries. It will be further understood that the words or terms should be interpreted as having meanings that are consistent with their meanings in the context of the relevant art and the technical idea of the invention, based on the principle that an inventor may properly define the meaning of the words or terms to best explain the invention.

**Separator**

A separator of the present invention may include a base membrane, and a hydrophilic porous structure layer or a hydrophobic porous structure layer, which is stacked on at least one side of the base membrane, wherein the base membrane may be an anion exchange membrane, a cation exchange membrane, or an amphoteric ion exchange membrane.

According to an embodiment of the present invention, the separator may include a base membrane and a porous structure layer, and the porous structure layer may be stacked on at least one side of the base membrane. The base membrane may be an ion-selective exchange membrane, and the base membrane may include an anion exchange membrane, a cation exchange membrane, or an amphoteric ion exchange membrane. Specifically, the separator of the present invention may be an anion exchange membrane.

In addition, the porous structure layer may have hydrophilic or hydrophobic properties. The porous structure layer may be stacked on at least one side of the base membrane, and may thus serve to maintain a certain amount of moisture in the base membrane.

In addition, the porous structure layer has a porous structure, and the porous structure indicates a structure having a number of holes, that is, pores, on the surface or inside of a material. The pores may have an irregular shape such as a spherical shape, an ellipsoidal shape, or a rod shape, and the pores may have an average diameter of 0.2 um to 0.45 um as will be described later. As for the average diameter of the pores, the length of a major axis of surface pores found in a randomly sampled range (10 um or greater in width and 15 um or greater in length) in an image measured using a scanning electron microscope (FE-SEM) may be measured as a pore size. The porous structure layer of the present invention has a porous structure, and may thus be light in weight and have excellent mechanical strength, and have low resistance to promote transport of materials through the pores.

Meanwhile, in general, an anion exchange membrane is typically used as a separator of an electrochemical conversion device. When an anion exchange membrane is used as a separator of the electrochemical conversion device, electrochemical conversion rate according to the electrochemical conversion device is shown to be excellent, but the anion exchange membrane may be easily dried when exposed at room temperature, and the anion exchange membrane is easily dried when assembled to a cell or stack of the electrochemical conversion device at room temperature, and fails to maintain moisture content and may thus be broken or damaged. Specifically, the anion exchange membrane may be stored along with water or a fluid retaining sufficient moisture, but given that a process of assembling a cell or stack is performed at room temperature, moisture in the anion exchange membrane is easily evaporated and the anion exchange membrane may be damaged when the anion exchange membrane is exposed at room temperature although the anion exchange membrane is stored in water having sufficient moisture. Accordingly, the typical anion exchange membrane may critically affect work processability due to such low mechanical properties at room temperature. Therefore, in order to improve or maintain the mechanical properties and work processability of the anion exchange membrane, a certain amount of moisture needs to be constantly present in the anion exchange membrane to maintain moisture wettability.

The separator of the present invention has the effect of improving the low mechanical properties and low work processability, which are limitations of the typical separator, while maintaining performance equal to or greater than that of the typical separator. Specifically, the separator of the present invention has a porous structure layer having hydrophilic or hydrophobic properties stacked on at least one surface of the base membrane, and may thus maintain a certain amount of moisture in the separator even at room temperature for a long period of time, and accordingly may improve low mechanical properties and low work processability.

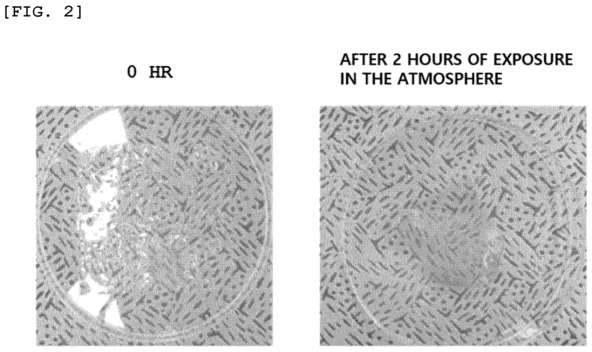

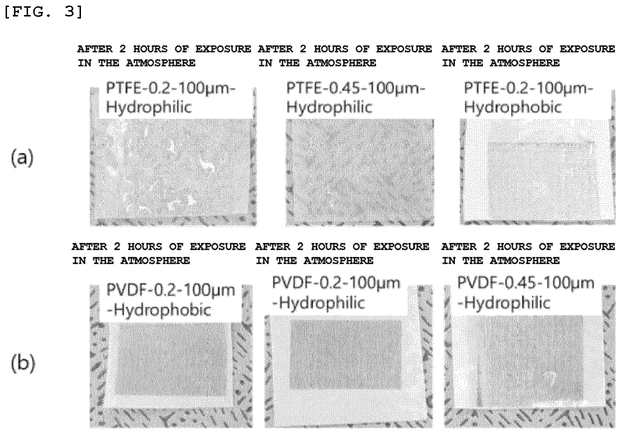

FIG. 2 shows a state when a typical anion exchange membrane treated with a hydrophilic coating is exposed at room temperature for 2 hours, and FIG. 3 shows a state when a separator in which a hydrophilic porous structure layer is stacked on a surface of the anion exchange membrane of the present invention is exposed at the same room temperature for 2 hours. (a) from FIG. 3 is one to which surface hydrophilic- or hydrophobic-treated PTFE is applied, and (b) from FIG 3 is one to which surface hydrophilic- or hydrophobic-treated PVDF is applied.

According to an embodiment of the present invention, the separator may not be deformed compared to an initial shape when the separator is exposed at room temperature for 2 hours or more.

Specifically, referring to FIG. 2, when the separator of the present invention and the typical separator are equally exposed at room temperature, the typical separator is broken or mechanically warped due to moisture evaporation after 1 hour to 2 hours.

On the other hand, referring to FIG. 3, the separator of the present invention is capable of maintaining the initial shape without breakage or damage even after 1 hour to 2 hours. The separator of the present invention has a structure in which a porous structure layer having hydrophilic or hydrophobic properties is stacked on the surface of the base membrane, and may thus have greater moisture content than a simply hydrophilic-treated membrane, and maintain the moisture content for a long period of time.

Accordingly, the separator may maintain the initial shape by the moisture without being deformed, and may thus improve low mechanical properties and work processability caused at room temperature. In addition, the separator of the present invention may maintain a weight of 50% or more, 60% or more, 70% or more, 80% or more, or 90% or more with respect to the initial weight even when exposed at room temperature for 2 hours or more. In addition, when the separator is exposed at room temperature for 2 hours or more, the separator may have a shrinkage rate of 15% or less, 13% or less, 11% or less, 9% or less, 7% or less, 5% or less, or 3% or less. The shrinkage rate may be calculated from (initial length of separator - length of separator after shrinking at 25 °C for 2 hr)/(initial length of separator) $\times$ 100.

In addition, a process of preparing the separator of the present invention may be simply performed in a less complicated manner than a hydrophilic treatment process of one membrane. Specifically, the process of coating one separator with a hydrophilic material may be performed at a high temperature of 100 °C or higher, and in this case, the separator may be deformed and may thus shrink or melt. In addition, the coating is not well performed by the moisture present in the separator and is applicable only when a water-based binder is used or a dry environment is provided, and accordingly, the process of hydrophilic-treating or coating a surface of the typical separator may be complicated and time-consuming in terms of process conditions. In addition, in the case of coating using water as a solvent, uniform coating of internal pores is hardly achievable due to high viscosity and surface tension of water, and the hydrophilic coating material is dissolved in water and detached from the separator, causing loss of hydrophilicity. In addition, as the binder is used, the separator has greater thickness to reduce efficiency such as a decrease in energy density and an increase in manufacturing costs.

According to an embodiment of the present invention, the separator may include no binder between the base membrane and the hydrophilic porous structure layer. Specifically, the separator of the present invention is prepared by stacking a porous structure layer having hydrophilic properties without using a binder, and accordingly, the separator may be prepared to have a smaller thickness. In addition, in the separator preparation process of the present invention, the stacked porous structure layer has greater adhesion due to the moisture present in the ion-selective exchange membrane and the porous structure layer may thus be directly fixed to the ion-selective exchange membrane. Therefore, when preparing the separator according to the present invention, the time for preparation may be reduced compared to the time for preparing the typical separator through hydrophilic treatment.

According to an embodiment of the present invention, the hydrophilic porous structure layer may include at least one selected from the group consisting of hydrophilic polymers, hydrophilic metals, ceramics, and cellulose.

The hydrophilic porous structure layer included in the separator of the present invention may include a hydrophilic polymer. Specifically, the hydrophilic polymer may be a polymer prepared by polymerizing a monomer containing at least one hydrophilic group selected from the group consisting of a hydroxyl functional group (-OH), a carboxyl acid functional group (-COOH), an alkylene oxide functional group (-R-O-), and an amine functional group ($-NH_2$). In addition, the hydrophilic polymer may include at least one selected from the group consisting of polypyrolidone, polyethylene glycol, and polyvinyl alcohol. In addition, the hydrophilic polymer may be one in which at least one hydrophobic polymer selected from the group consisting of polyethylene (PE), polypropylene (PP), polycarbonate (PC), polyimide, polyether imide (PEI), polysulfone (PSF), polyether sulfone (PES), polyvinylidene difluoride (PVDF), and polytetrafluoroethyelene (PTFE) is hydrophilic-treated. More specifically, the hydrophilic polymer that may be used in the hydrophilic porous structure layer of the present invention may be polytetrafluoroethylene (PTFE) subjected to hydrophilic treatment.

In addition, a hydrophilic metal may be included in the hydrophilic porous structure layer, and most metals and metal oxides have high surface energy, and may thus have hydrophilic properties. The hydrophilic metal may indicate a metal or metal oxide whose surface is completely wetted by water and having a contact angle of less than 90° with respect to water. The metal may include at least one selected from the group consisting of Ni, Cu, Al, Fe, stainless steel, Fe-Ni-based alloy, Fe-Ni-Cr-based alloy, and Fe-Ni-SiC-based alloy, and the metal oxide is a hydrophilic metal oxide, and may include, for example, at least one selected from the group consisting of titanium butoxide, zirconium butoxide, MgO, hydrophilic zeolite A, and ETS-based porous materials.

In addition, a ceramic may be included in the hydrophilic porous structure layer, and the ceramic may include at least one from the group consisting of $ZrO_2$, $Al_2O_3$, and $SiO_2$.

In addition, cellulose may be included in the hydrophilic porous structure layer, and the cellulose may include cellulose acetate and cellulose nitrate.

According to an embodiment of the present invention, the hydrophilic porous structure layer may be a polytetrafluoroethylene (PTFE) structure layer having a hydrophilic-treated surface.

The polytetrafluoroethylene (PTFE) is a polymer compound composed of carbon and fluorine, and is a crystalline material having excellent electrical resistance, high thermal stability, acid resistance, chemical resistance, melting point, and dimensional stability. Meanwhile, the polytetrafluoroethylene exhibits excellent sliding properties and non-adhesion properties, and is a high molecular compound composed only of carbon and fluorine, and thus is essentially hydrophobic.

Therefore, the polytetrafluoroethylene that may be used in the hydrophilic porous structure layer of the present invention is a typical polytetrafluoroethylene subjected to hydrophilic treatment, and the hydrophilic-treated polytetrafluoroethylene may maintain mechanical strength and dimensional stability equal to or greater than those of the typical polytetrafluoroethylene, and may also have improved adhesion and hydrophilicity. Accordingly, the hydrophilic porous structure layer containing the hydrophilic-treated polytetrafluoroethylene has improved adhesion to the anion exchange membrane and may thus be stacked and then fixed without a separate binder.

In contrast, hydrocarbon-based polymer materials such as polyethylene have low mechanical strength and become brittle when dried, and expand when wetted, resulting in low dimensional stability. In addition, the porous structure layer including polyethylene has weak adhesion to the anion exchange membrane, and thus needs a separate binder, and accordingly, the separator has greater thickness as a whole to cause poor energy density and resistance.

A method of hydrophilic-treating the polytetrafluoroethylene aims to reduce the contact angle of water on the surface of a polymer material to ensure hydrophilicity, and methods such as high voltage corona discharge and DC plasma discharge may be used to alter the contact angle.

According to an embodiment of the present invention, the hydrophilic porous structure layer has an average pore diameter of 0.2 um to 0.45 um. More specifically, the hydrophilic porous structure layer may have an average pore diameter of 0.2 um or greater, 0.22 $\mu$m or greater, 0.24 um or greater, 0.26 $\mu$m or greater, or 0.28 um or greater, and may also be 0.45 um or less, 0.43 um or less, or 0.41 um or less, 0.4 um or less, or 0.37 um or less. When the average pore diameter of the hydrophilic porous structure layer of the present invention satisfies the above range, the hydrophilic porous structure layer has reduced resistance, and may thus have improved electrolyte permeability, and excellent mechanical strength as well.

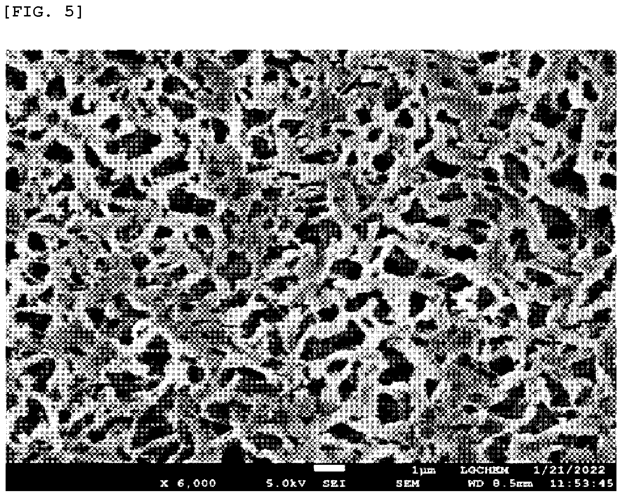

FIG. 5 is an SEM image of a porous structure layer including PTFE of the present invention. As for the average diameter of the pores, a sample surface is magnified 2,500 times using a scanning electron microscope (FE-SEM) (Hitachi S-4800 Scanning Electron Microscope) and then measured, and thereafter, the length of a major axis of surface pores found in a randomly sampled range (10 um or greater in width and 15 um or greater in length) in an image measured may be measured as a pore size. The number of measurements is at least 10, and the average and maximum values of the pore sizes obtained after measurement may be determined.

According to an embodiment of the present invention, the hydrophilic porous structure layer may be stacked on any one side of the base membrane. The hydrophilic porous structure layer may be stacked on at least one side of the base membrane, and more specifically, the hydrophilic porous structure layer may be stacked on only one side of the base membrane. Even for a separator in which the hydrophilic porous structure layer is stacked on only one side of the base membrane, the separator may maintain water content equivalent to that of a separator in which the hydrophilic porous structure layer is stacked on both sides of the base membrane, and may thus obtain sufficient mechanical strength and work processability for assembling cells or stacks. In addition, the separator of the present invention in which the hydrophilic porous structure layer is stacked on only one side of the base membrane has a reduced thickness as a whole to have high ionic conductivity, and has reduced resistance to obtain high performance and conversion rate.

Meanwhile, in the case of a structure in which an anion exchange membrane or an ion conductive polymer material is impregnated in a hydrophilic-treated porous structure layer, the porous structure layer is not capable of maintaining moisture in the exchange membrane, and accordingly, water wettability may be significantly reduced compared to a separator having a stack structure.

In addition, in the separator having the impregnated structure, an entire area of the anion exchange membrane is not in the form of a single layer, and each pore of the porous structure layer is impregnated with the anion exchange membrane, and thus transport of ions is not uniformly performed over the entire area of the anion exchange membrane, causing a decrease in carbon monoxide Faraday efficiency.

According to an embodiment of the present invention, the separator of the present invention may include a base membrane and a hydrophobic porous structure layer on at least one side of the base membrane.

The hydrophobic porous structure layer may serve to prevent moisture retained when the ion-selective exchange membrane is stored through hydrophobic properties from evaporating or escaping to the outside. A material that may be used as a material for the hydrophobic porous structure layer may include at least one selected from the group consisting of polytetrafluoroethyelene (PTFE), polyvinylidene fluoride (PVDF), nylon, cellulose acetate (CA), and polyethylene sulfide (PES), and specifically, the hydrophobic porous structure layer of the present invention may include PVDF.

**Electrochemical conversion cell**

An electrochemical conversion cell of the present invention may include an anode, a cathode, an electrolyte, and a separator disposed between the cathode and the anode. The separator includes the above-described separator according to the present invention.

According to another embodiment of the present invention, the electrochemical conversion cell may be used in all electrochemical conversion devices, and the electrochemical conversion devices may include devices capable of producing useful chemicals through electrochemical conversion such as fuel cells or water electrolysis, and devices capable of reducing and converting carbon dioxide and NOx. Specifically, the electrochemical conversion cell may be an electrochemical conversion cell included in an electrolysis device that converts carbon dioxide into carbon monoxide.

According to an embodiment of the present invention, the electrochemical conversion cell may be a cell that converts carbon dioxide into carbon monoxide, and may include an anode, a cathode, an electrolyte, and a separator. Electrolysis indicates decomposition of materials through an oxidation-reduction reaction by applying DC voltage for a decomposition reaction that does not take place spontaneously. The anode, as an oxidizing electrode, oxidizes water to generate oxygen, and in this case, hydrogen ions are generated. The hydrogen ions generated at the anode are transferred to the cathode through the electrolyte, and the cathode is a reduction electrode, and reactants injected into the cathode may react with electrons and the hydrogen ions transferred from the anode to generate products. In addition, the separator may be disposed between the anode and the cathode. The separator may be composed of inert materials that do not participate in an electrochemical reaction by itself, but may provide a path for ions to move between the anode and the cathode, and serve to separate physical contact between the anode and the cathode.

In addition, the anode and the cathode of the electrochemical conversion cell of the present invention may each include a catalyst layer. In addition, water vapor supplied along with carbon dioxide in the cathode region generates reduction products through an electrical reduction reaction on a surface of the cathode. Accordingly, the cathode may include a gas diffusion layer to uniformly supply humidified carbon dioxide gas to the cathode region. When the cathode includes the hydrophobic gas diffusion layer, supplied carbon dioxide may be well diffused, distributed, and supplied to the catalyst layer of the cathode. In addition, the hydrophobic gas diffusion layer effectively prevents condensation of moisture so that carbon dioxide is continuously and uniformly supplied and the electrolysis reaction is performed well. In addition, the catalyst layer may have a surface having a porous structure, and the like so that gas permeation properties are well played on the surface.

According to an embodiment of the present invention, the anode may include a catalyst active in electrolysis of water, and the catalyst layer of the anode may include at least one selected from the group consisting of Pt, Au, Pd, Ir, Ag, Rh, Ru, Ni, Al, Mo, Cr, Cu, Ti, W, an alloy thereof, or a mixed metal oxide, for example, $Ta_2O_5$, $IrO_2$, and the like for oxygen generation reaction. Specifically, the anode in the carbon dioxide electrolysis device of the present invention may include nickel (Ni) coated with ruthenium oxide ($RuO_2$) and cerium oxide ($CeO_2$).

In addition, since the carbon dioxide reduction reaction taking place at the cathode competes with a hydrogen generation reaction, a catalyst having a high voltage required for the hydrogen generation reaction and showing activity in the carbon dioxide reduction reaction may be included. The catalyst layer of the cathode may include at least one selected from the group consisting of Sn, Sn alloy, Al, Au, Ag, C, Cd, Co, Cr, Cu, Cu alloy, Ga, Hg, In, Mo, Nb, Ni, $NiCo_2O_4$, Ni alloy, Ni-Fe alloy, Pb, Rh, Ti, V, W, Zn, and a mixture thereof for the hydrogen generation reaction. Specifically, the cathode in the carbon dioxide electrolysis device of the present invention may include silver (Ag).

In addition, as the separator, a cation exchange membrane (CEM) or an anion exchange membrane (AEM) may be included.

In addition, the electrolyte may be selected from the group consisting of $KHCO_3$, $K_2CO_3$, KOH, KCl, $KClO_4$, $K_2SiO_3$, $Na_2SO_4$, $NaNO_3$, NaCl, NaF, $NaClO_4$, $CaCl_2$, guanidinium cation, $H^+$ cation, alkali metal cation, ammonium cation, alkylammonium cation, halide ion, alkyl amine, borate, carbonate, guanidinium derivative, nitrite, nitrate, phosphate, polyphosphate, perchlorate, silicate, sulfate, tetraalkyl ammonium salt, or aqueous solution containing a mixture thereof and used, and the electrolyte of the carbon dioxide electrolysis device of the present invention may include KOH.

In addition, as the gas diffusion layer, porous materials using carbon materials, such as carbon fiber cloth, carbon fiber felt, and carbon fiber paper, or porous metal materials formed of thin metal plates with a network structure, such as expanded metal and metal mesh, may be used, and in the carbon dioxide electrolysis device of the present invention, carbon fiber cloth may be used as the gas diffusion layer.

Hereinafter, examples of the present invention will be described in detail in such a manner that it may easily be performed by a person with ordinary skill in the art to which the present invention pertains. The present invention may, however, be embodied in many different forms, and is not limited to Examples set forth herein.

## Example 1

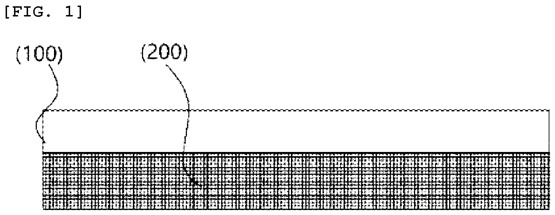

As shown in FIG. 1, a separator including an anion exchange membrane and a hydrophilic porous structure layer stacked on one side of the anion exchange membrane was prepared. The process of preparing the separator is as follows.

An anion exchange membrane (Sustainion X37, Dioxide Materals) was prepared as a base membrane, and surface hydrophilic-treated polytetrafluoroethylene (PTFE) having a pore size of 0.2 um (Hyundai Micro) was prepared as a porous structure layer. The surface of the surface hydrophilic-treated PTFE porous structure layer was sufficiently wetted with DI water, stacked on the anion exchange membrane, and then sufficiently bonded to an interface at a constant pressure.

## Example 2

A separator having a stack structure was prepared in the same manner as in Example 1, except that a hydrophilic-treated PVDF (Hyundai Micro) porous structure layer was used instead of the hydrophilic-treated PTFE (Hyundai Micro) porous structure layer.

### Example 3

A separator was prepared in the same manner as in Example 1, except that the surface hydrophilic-treated PTFE porous structure layer was used alone without the anion exchange membrane.

### Example 4

A separator having a stack structure was prepared in the same manner as in Example 1, except that a surface hydrophilic-treated PTFE porous structure layer having a pore size of 0.4 um was used.

### Example 5

A separator having a stack structure was prepared in the same manner as in Example 1, except that a porous structure layer containing cellulose acetate was used instead of the hydrophilic-treated PTFE (Hyundai Micro).

### Example 6

A separator having a stack structure was prepared in the same manner as in Example 1, except that a porous structure layer containing polyethylene sulfide was used instead of the hydrophilic-treated PTFE (Hyundai Micro).

### Comparative Example 1

A separator was prepared in the same manner as in Example 1, except that the porous structure layer was not included and the anion exchange membrane was included alone.

### Comparative Example 2

A separator having a stack structure was prepared in the same manner as in Example 1, except that a porous structure layer containing polyethylene (PE) was used.

### Comparative Example 3

As a porous structure layer, surface hydrophilic-treated polytetrafluoroethylene (PTFE) (Hyundai Micro) having a pore size of 0.2 um was prepared. The polyterafluoroethylene was fixed to a 10 cm $\times$ 10 cm frame, and the PTFE frame was sufficiently immersed in a D.I water bath, and kept at 60 °C for 12 hours. An aqueous solution containing 30 wt% of ethanolamine (sigma-aldrich > 98%) was prepared, and then the PTFE frame was added thereto and subjected to a reaction with stirring at 80 °C for one day. Thereafter, the PTFE frame was washed several times using distilled water to remove residual ethanolamine, and vacuum dried at room temperature for one day. On an anion exchange membrane (Sustainion X37, Dioxide Materals), PTFE whose surface and pore interiors were substituted with an ionic functional group fixed to the frame was placed, and left for 1 hour to impregnate the anion exchange membrane, thereby preparing a separator.

### Experimental Example 1

The separators prepared in Examples and Comparative Examples were exposed in the external atmosphere at room temperature for 2 hours to observe a moisture evaporation phenomenon and a state of the separator, and the results on the state of the separators are shown in Table 1 below.

[Table 1]

| Time course | Example 1 | Example 2 | Example 3 | Example 4 | Example 5 | Example 6 | Comparative Example 1 | Comparative Example 2 | Comparative Example 3 |
|---|---|---|---|---|---|---|---|---|---|
| After 1 hr | ○ | ○ | ○ | ○ | ○ | ○ | △ | ○ | △ |

(continued)

| Time course | Example 1 | Example 2 | Example 3 | Example 4 | Example 5 | Example 6 | Comparative Example 1 | Comparative Example 2 | Comparative Example 3 |
|---|---|---|---|---|---|---|---|---|---|
| After 2 hr | ○ | ○ | ○ | ○ | ○ | ○ | X | ○ | X |

* ○: Fair condition
* △: Cracking and Partial breakage of separator
* X: Cracking and Overall breakage of separator

## Experimental Example 2

Carbon dioxide electrolysis was performed by regulating the operating conditions of a carbon dioxide electrolysis device including the separators prepared in Examples and Comparative Examples as follows.

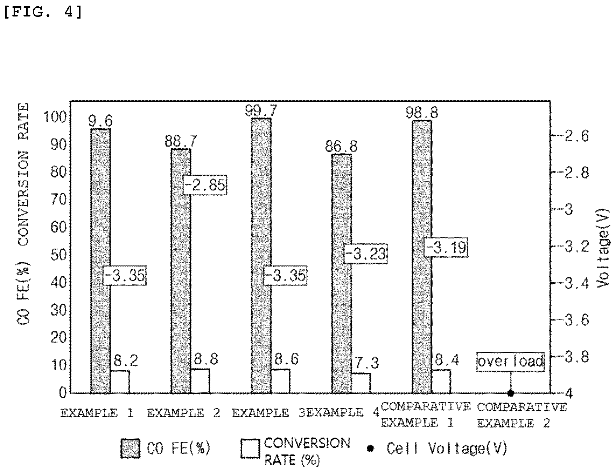

Reaction current density: 100 mA/cm$^2$ (constant current operation)
Reaction voltage: 3 ~ 3.5 V
Reaction temperature: 40 °C
Reaction pressure: 1 atm (normal pressure)
Anode catalyst: $RuO_2 + CeO_2$ on Ni mesh
Cathode catalyst: Ag powder
Electrode area: 25 cm$^2$
Gas diffusion layer: Sigracet 39BB
Anode electrolyte: 0.5 M $KHCO_3$ (25 ml/min)
Cathode reactant: 40 °C humidified $CO_2$ gas (25 ccm)
During the electrolysis, carbon dioxide conversion rate (%), carbon monoxide Faraday efficiency (CO Faraday efficiency, %), and voltage were measured, and the resulting values are shown in Table 2 below, and the resulting values are shown on a graph in FIG. 4.

**\* Measurement method**

**(1) Carbon dioxide conversion rate (%)**

The conversion rate (%) was calculated as the ratio of produced carbon monoxide (CO) to an amount of carbon dioxide ($CO_2$) gas introduced per hour.

**(2) Carbon monoxide Faraday efficiency (%)**

In a discharge line, gas composition was measured through gas-chromatography (GC) analysis. In addition, the Faraday efficiency was calculated through the following Equation.

[Equation 1]

$$FE_{product}(\%) = \frac{i_{product}}{i_{total}} \times 100 = \frac{V_{product} \times Q \times \frac{2Fp}{RT}}{i_{total}} \times 100$$

In Equation 1, Q indicates a flow rate in a discharge line, F indicates Faraday constant, p indicates pressure, T indicates measuring temperature, and R indicates ideal gas constant. The total current ($i_{total}$) is a value of the total current applied over time, and the current for products ($i_{product}$) is a value calculated from gas volume ($V_{product}$) measured through GC analysis.

**(3) Voltage (V)**

Current was applied and voltage was measured through a VSP potentiostat from BioLogic. An 80 A booster was installed to apply current corresponding to a large area. The current was applied at 100 mA/cm$^2$ , 200 mA/cm$^2$, and 300 mA/cm$^2$ by stage, and maintained for a predetermined period of time, and then the voltage was reported after 10 minutes. In this case, the gas-chromatography (GC) analysis was also performed together.

[Table 2]

| Item | Example 1 | Example 2 | Example 3 | Example 4 | Example 5 | Example 6 | Comparative Example 1 | Comparative Example 2 | Comparative Example 3 |
|---|---|---|---|---|---|---|---|---|---|
| Current Density | 100 mA/cm$^2$ | 100 mA/cm$^2$ | 100 mA/cm$^2$ | 100 mA/cm$^2$ | 100 mA/cm$^2$ | 100 mA/cm$^2$ | 100 mA/cm $^2$ | 100 mA/cm $^2$ | 100 mA/cm $^2$ |
| Carbon di-oxide conversion rate (%) | 8.2 | 8.8 | 8.6 | 7.3 | 8.7 | 8.7 | 8.4 | 0 | 8.2 |
| CO Faraday efficiency (%) | 96 | 88.7 | 99.7 | 86.8 | 89.1 | 92.1 | 98.8 | 0 | 85.0 |
| voltage (V) | -3.35 | -2.85 | -3.35 | -3.23 | -3.35 | -3.27 | -3.19 | Overload (> 6V) | -3.5 |

Referring to Tables 1 and 2 above, it is determined that Examples 1 to 6 using the separator including the porous structure layer according to the present invention were in a fair condition without changes in the state of the separator even when exposed in the external atmosphere at room temperature for 2 hours, and this is because moisture wettability of the separator was maintained by the porous structure layer and thus the separator contained a certain level of moisture. On the other hand, it is determined that in Comparative Example 1 using only the anion exchange membrane with no porous structure layer, when exposed in the external atmosphere at room temperature for 2 hours, the entire separator was broken and cracked.

In addition, it is determined that Examples 1 to 6 maintained moisture wettability, resulting in improved work processability, and also had excellent effects in terms of carbon dioxide conversion rate, CO Faraday efficiency, and overvoltage. Meanwhile, it is determined that Comparative Example 2 using a separator including a porous structure layer containing polyethylene (PE) maintained moisture wettability, but when assembled to an electrochemical conversion cell and used, an overvoltage of 6 V or greater took place and a very inferior effect in terms of carbon dioxide conversion rate and CO Faraday efficiency was shown.

In addition, Comparative Example 3 has a structure in which an anion exchange membrane was impregnated in the porous structure layer, and in Comparative Example 3, the anion exchange membrane having ion conductivity was not in the form of a single layer and was impregnated and unevenly arranged in each pore, and thus the porous structure layer failed to maintain moisture wettability, and the separator was broken after 1 hour to 2 hours. In addition, it is determined that in the separator of Comparative Example 3, the movement of ions was not performed uniformly throughout the entire area of the anion exchange membrane, and thus the carbon monoxide Faraday efficiency was reduced.

100: Anion exchange membrane
200: Porous structure layer

**Claims**

1.  A separator comprising:

    a base membrane; and

a hydrophilic porous structure layer or a hydrophobic porous structure layer, which is stacked on at least one side of the base membrane,

wherein the base membrane is an anion exchange membrane, a cation exchange membrane, or an amphoteric ion exchange membrane.

2. The separator of claim 1, wherein the hydrophilic porous structure layer comprises a hydrophilic polymer.

3. The separator of claim 1, wherein the hydrophilic porous structure layer is a polytetrafluoroethylene (PTFE) structure layer having a hydrophilic-treated surface.

4. The separator of claim 1, wherein the hydrophilic porous structure layer has an average pore diameter of 0.2 um to 0.45 um.

5. The separator of claim 1, wherein the hydrophilic porous structure layer is stacked on any one side of the base membrane.

6. The separator of claim 1, wherein the separator comprises no binder between the base membrane and the hydrophilic porous structure layer.

7. The separator of claim 1, wherein the hydrophobic porous structure layer comprises at least one selected from the group consisting of PTFE, PVDF, nylon, cellulose acetate (CA), and polyethylene sulfide (PES).

8. An electrochemical conversion cell comprising:

a cathode; an anode; an electrolyte; and
a separator according to any one of claims 1 to 7, which is disposed between the cathode and the anode.

9. The electrochemical conversion cell of claim 8, wherein the electrochemical conversion cell converts carbon dioxide into carbon monoxide.

[FIG. 1]

(100)    (200)

[FIG. 2]

0 HR

AFTER 2 HOURS OF EXPOSURE IN THE ATMOSPHERE

[FIG. 3]

(a) AFTER 2 HOURS OF EXPOSURE IN THE ATMOSPHERE — PTFE-0.2-100μm-Hydrophilic; AFTER 2 HOURS OF EXPOSURE IN THE ATMOSPHERE — PTFE-0.45-100μm-Hydrophilic; AFTER 2 HOURS OF EXPOSURE IN THE ATMOSPHERE — PTFE-0.2-100μm-Hydrophobic

(b) AFTER 2 HOURS OF EXPOSURE IN THE ATMOSPHERE — PVDF-0.2-100μm-Hydrophobic; AFTER 2 HOURS OF EXPOSURE IN THE ATMOSPHERE — PVDF-0.2-100μm-Hydrophilic; AFTER 2 HOURS OF EXPOSURE IN THE ATMOSPHERE — PVDF-0.45-100μm-Hydrophilic

[FIG. 4]

[FIG. 5]

## INTERNATIONAL SEARCH REPORT

| International application No. |
|---|
| **PCT/KR2023/005281** |

**A.    CLASSIFICATION OF SUBJECT MATTER**

**C25B 13/02**(2006.01)i; **C25B 13/08**(2006.01)i; **C25B 1/23**(2021.01)i; **C25B 9/19**(2021.01)i

According to International Patent Classification (IPC) or to both national classification and IPC

**B.    FIELDS SEARCHED**

Minimum documentation searched (classification system followed by classification symbols)

C25B 13/02(2006.01); B01D 53/22(2006.01); B01D 69/10(2006.01); C01B 32/40(2017.01); C08J 5/22(2006.01); C25B 1/00(2006.01); C25B 15/02(2006.01); C25B 3/04(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 베이스(base), 친수성(hydrophilicity), 소수성(hydrophobicity), 이온 교환막(ion exchange membrane), 분리막(separator), 폴리테트라플루오르에틸렌(polytetrafluoroethylene), 기공(porosity), 이산화탄소(carbon dioxide), 일산화탄소(carbon monoxide), 전기분해(electrolysis), 적층(lamination)

**C.    DOCUMENTS CONSIDERED TO BE RELEVANT**

| Category* | Citation of document, with indication, where appropriate, of the relevant passages | Relevant to claim No. |
|---|---|---|
| X | JP 07-258436 A (ASAHI GLASS CO., LTD.) 09 October 1995 (1995-10-09) See paragraphs [0008]-[0011], [0038], [0043], [0048] and [0049]. | 1-9 |
| A | KR 10-2017-0056588 A (3M INNOVATIVE PROPERTIES COMPANY) 23 May 2017 (2017-05-23) See claims 1-10. | 1-9 |
| A | KR 10-2019-0057786 A (KOREA INSTITUTE OF INDUSTRIAL TECHNOLOGY) 29 May 2019 (2019-05-29) See claims 1-3. | 1-9 |
| A | KR 10-2019-0051879 A (LG CHEM, LTD.) 15 May 2019 (2019-05-15) See claims 1-11. | 1-9 |
| A | JP 2018-154901 A (TOSHIBA CORP.) 04 October 2018 (2018-10-04) See claims 1-10. | 1-9 |

☐ Further documents are listed in the continuation of Box C.　　☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **20 July 2023** | **20 July 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

<table>
<tr><td colspan="2" align="center">**INTERNATIONAL SEARCH REPORT**<br>**Information on patent family members**</td><td colspan="2">International application No.<br><br>**PCT/KR2023/005281**</td></tr>
</table>

| Patent document<br>cited in search report | | | Publication date<br>(day/month/year) | Patent family member(s) | | | Publication date<br>(day/month/year) |
|---|---|---|---|---|---|---|---|
| JP | 07-258436 | A | 09 October 1995 | None | | | |
| KR | 10-2017-0056588 | A | 23 May 2017 | AU | 2015-315620 | A1 | 17 March 2016 |
| | | | | AU | 2015-315620 | A1 | 23 March 2017 |
| | | | | CA | 2960595 | A1 | 17 March 2016 |
| | | | | CN | 106715760 | A | 24 May 2017 |
| | | | | EP | 3191621 | A1 | 19 July 2017 |
| | | | | JP | 2017-527701 | A | 21 September 2017 |
| | | | | JP | 6606182 | B2 | 13 November 2019 |
| | | | | KR | 10-2446810 | B1 | 23 September 2022 |
| | | | | US | 10570524 | B2 | 25 February 2020 |
| | | | | US | 11118274 | B2 | 14 September 2021 |
| | | | | US | 2017-0183789 | A1 | 29 June 2017 |
| | | | | US | 2020-0149172 | A1 | 14 May 2020 |
| | | | | WO | 2016-039999 | A1 | 17 March 2016 |
| KR | 10-2019-0057786 | A | 29 May 2019 | None | | | |
| KR | 10-2019-0051879 | A | 15 May 2019 | CN | 111201077 | A | 26 May 2020 |
| | | | | EP | 3708244 | A1 | 16 September 2020 |
| | | | | JP | 2020-535956 | A | 10 December 2020 |
| | | | | JP | 6965491 | B2 | 10 November 2021 |
| | | | | US | 11241659 | B2 | 08 February 2022 |
| | | | | US | 2020-0238219 | A1 | 30 July 2020 |
| | | | | WO | 2019-093750 | A1 | 16 May 2019 |
| JP | 2018-154901 | A | 04 October 2018 | CN | 108624905 | A | 09 October 2018 |
| | | | | EP | 3378968 | A1 | 26 September 2018 |
| | | | | JP | 6672211 | B2 | 25 March 2020 |
| | | | | US | 10208385 | B2 | 19 February 2019 |
| | | | | US | 2018-0274109 | A1 | 27 September 2018 |

Form PCT/ISA/210 (patent family annex) (July 2022)

**EP 4 491 768 A1**

**Patent documents cited in the description**

- KR 1020220049687
- KR 1020230050853
- KR 1020190125822 A